# EUROPÄISCHE PATENTANMELDUNG

(11) **EP 0 582 097 A2**
(43) Veröffentlichungstag der Anmeldung: **09.02.1994**
(21) Anmeldenummer: 93110923.5
(22) Anmeldetag: 08.07.1993
(51) Int. Cl.: A01F 12/30, A01D 57/10

(54) **Rotationsförderer und Abscheidevorrichtung**

(30) Priorität: 03.08.1992 DE 4225551
(71) Anmelder: DEERE & COMPANY, Moline, Illinois 61265 (US)
(72) Erfinder: Dannigkeit, Helmut, D-66484 Battweiler (DE)
(74) Vertreter: Feldmann, Bernhard

(57) **Zusammenfassung**

2.1. Es ist bekannt, das auf einem als Hordenschüttler ausgebildeten Förderer 30 geförderte Gutgemenge mittels Druckluft aufzulockern, damit sich Zwischenräume bilden, durch die Restgut, z. B. Körner, entweichen können. Es ist nachteilig, daß die Richtung der eingeblasenen Luft der Fallrichtung des Restguts entgegengesetzt ist und somit keine ausreichende Abscheidung gewährleistet ist.

2.2. Der vorgeschlagene Rotationsförderer 42 enthält auf seinem Umfang Zinken 48, an deren Endabschnitt 56 Druckluft ausströmt, die im wesentlichen in die Fallrichtung des Restguts gerichtet ist.

2.3. Ein derartiger Rotationsförderer 42findet Anwendung bei Mähdreschern.

## Beschreibung

Die Erfindung betrifft einen Rotationsförderer mit wenigstens einem Zinken zum Abscheiden von Restgut aus einem Gutgemenge, insbesondere zum Absondern von Körnern aus einer Strohmatte in einer Erntemaschine, und eine Abscheideeinrichtung.

Die DE-19 04 406 zeigt einen aus einer drehenden Trommel und in dieser gelagerten Zinken bestehenden Rotationsförderer, der oberhalb mehrerer Hordenschüttler und quer zu der Hauptförderrichtung angeordnet ist. Die Zinken werden zusätzlich zu der drehenden Bewegung quer zu der Hauptförderrichtung bewegt und reißen somit die auf dem Hordenschüttler aufliegende Strohmatte auseinander, so daß zwischen den Strohhalmen Hohlräume entstehen und evtl. in der Strohmatte noch enthaltene Körner durch die Hohlräume hindurch ausfallen können.

Dieser an sich bewährte Rotationsförderer sollte hinsichtlich seiner Abscheidekapazität optimiert werden.

Die FR-PS-1.541.478 und die DE-OS-2 160 038 offenbaren ebenfalls mehrere parallel zueinander angeordnete Hordenschüttler eines Mähdreschers, die an ihrer Unterseite mit Druckluft beaufschlagt werden, die durch Öffnungen in Schüttlerbelägen austritt und somit ebenfalls die auf den Hordenschüttlern aufliegende Strohmatte aufreißen soll, so daß eingeschlossene Körner durch Zwischenräume entfallen können.

Die Abscheidevorrichtung nach diesen beiden Schriften sind insofern nachteilig, als die Richtung der Druckluft der gewünschten Ausfallrichtung der Körner entgegengerichtet ist, so daß die Körner daran gehindert werden, nach unten aus der Strohmatte heraus zu fallen.

Die der Erfindung zugrundeliegende Aufgabe wird darin gesehen, einen Rotationsförderer bzw. eine Abscheidevorrichtung zu schaffen, mit denen ein noch größerer Anteil an Körnern oder sonstigem Restgut aus dem Gutgemenge abgesondert werden kann.

Diese Aufgabe wird erfindungsgemäß durch die Lehre des Patentanspruchs 1 bzw. 10 gelöst, wobei in den jeweils weiteren Patentansprüchen Merkmale aufgeführt sind, die die Lösung in vorteilhafter Weise weiterentwickeln.

Auf diese Weise kann mittels Druckluft das Restgut, z. B. die Körner, aus dem Gutgemenge in der gewünschten Richtung herausgeblasen werden. Der Luftstrom wirkt dem Ausfallen nicht entgegen sondern unterstützt dies.

Eine besonders aktive Ausblaswirkung tritt ein, wenn vor dem Zinken und während dessen Bewegung ein Luftstrahl hergeht, der das Restgut direkt beaufschlagt.

Um eine Förderung des Restguts in die falsche Richtung sowie die Notwendigkeit, nicht benötigte Luft zu erzeugen, zu vermeiden, soll der Druckluftstrom nur auf einem Teil der Bewegungsbahn des Zinken wirken, nämlich nur dann, wenn sich der Zinke in der Gutmatte befindet und währenddessen Hohlräume erzeugt.

Mit geringem Bauaufwand, ohne einen zusätzlichen Bewegungswiderstand zu erzeugen und ohne die Gefahr der Beschädigung außenliegender Teile läßt sich Druckluft in die Gutmatte einblasen, indem der Zinke als Rohr ausgebildet ist, oder jedenfalls einen Druckluftkanal enthält, der die Druckluft zu dem Druckluftauslaß führt.

Alternativ kann eine separate und auf der Außenseite des Zinken geführte Leitung vorgesehen sein, die in einem Druckluftauslaß endet und sich mit dem Zinken bewegt. Eine derartige Leitung kann sowohl starr als auch flexibel sein.

Die Verbindung der Leitung für die Zufuhr der Luft mit dem Zinken oder der separaten Leitung im Fußbereich des Zinken verhindert eine Beschädigung verwendeter Verbindungsteile, weil sich die Gutmatte kaum bis dorthin erstreckt.

Die angegebene Krümmung des Endabschnitts des Zinken führt insbesondere gemeinsam mit der Anordnung mehrerer Druckluftauslässe dazu, daß das Restgut besonders wirkungsvoll und auf dem kürzesten Weg quer zur Förderrichtung ausgeblasen wird.

Damit nicht unnötig viel Druckluft verbraucht wird, wird deren Zufuhr beendet bzw. bei mehreren Zinken zu den jeweiligen Zinken unterbrochen, wenn der bzw. die Zinke(n) aus der Gutmatte austreten und somit nicht mehr wirksam werden können. Die Steuerung der Druckluftzufuhr kann mechanisch in Abhängigkeit von der Stellung des Zinken bzw. dessen Träger erfolgen.

Ein einfacher Aufbau einer Druckluftverteileinrichtung wird darin gesehen, daß sie aus einem Stator und einem diesem gegenüber abgedichteten und auf ihm drehbeweglichen Rotor besteht, wobei der Stator einen Druckluftanschluß und eine mit diesem verbundene Kammer aufweist, während an dem Rotor mindestens ein mit dem Druckluftauslaß in Verbindung stehender Auslaß vorgesehen ist, der zeitweise und abhängig von seiner relativen Stellung mit der Kammer in Verbindung bringbar ist. Die Zufuhr der Druckluft zu dem Druckluftauslaß erfolgt nur dann, wenn sich der Auslaß im Bereich der Kammer befindet.

Eine insbesondere mit dem erfindungsgemäßen Rotationsförderer ausgebildete erfindungsgemäße Abscheidevorrichtung weist eine Steigerung der Abscheidekapazität auf, wenn die Abscheideöffnungen eines in ihr enthaltenen, durchlässigen Förderers im Bereich des Rotationsförderers einen größeren Durchlaßquerschnitt aufweisen als davor bzw. dahinter.

Eine nochmalige Erhöhung der Abscheidekapazität tritt ein, wenn die Verweildauer der Erntegutmatte im Bereich des Rotationsförderers erhöht wird, was durch die Verwendung einer Steilstufe erreichbar ist.

In der Zeichnung ist ein nachfolgend näher beschriebenes Ausführungsbeispiel der Erfindung dargestellt. Es zeigt:
- Fig. 1: eine Erntemaschine mit einem erfindungsgemäßen Rotationsförderer in Seitenansicht und schematischer Darstellung,
- Fig. 2: den Rotationsförderer in Seitenansicht in vergrößerter Darstellung,

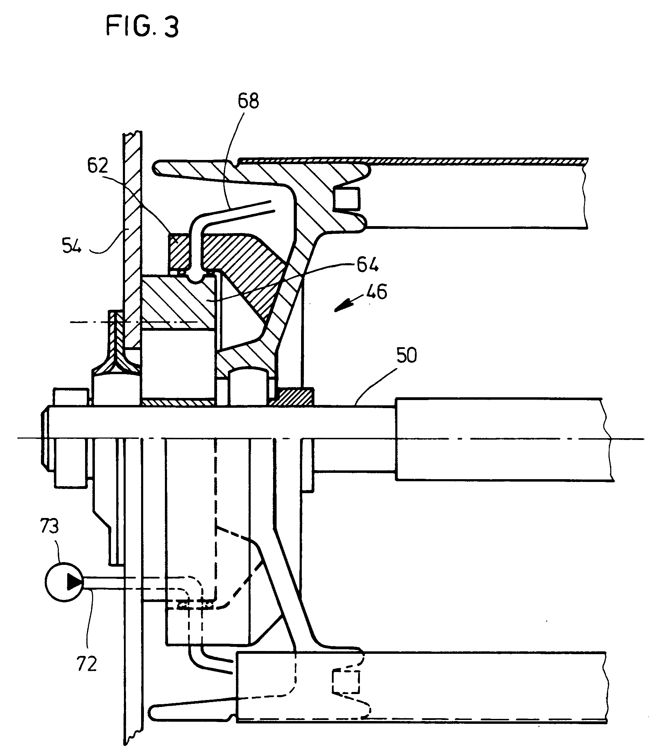

- Fig. 3: einen Abschnitt des vergrößert dargestellten Rotationsförderers in Vorderansicht und im Vertikalschnitt und
- Fig. 4: eine Druckluftverteileinrichtung für den Rotationsförderer im Vertikalschnitt.

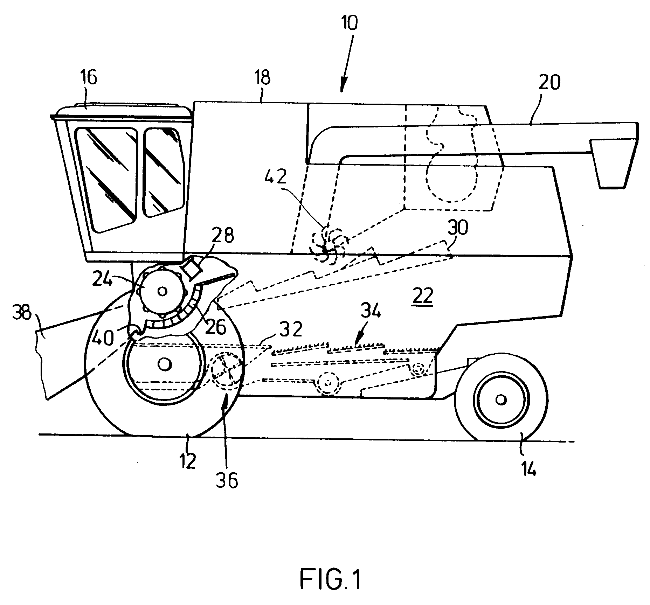

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf einem daran anschließenden als bekannter Hordenschüttler ausgebildeter oszillierender Förderer 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über den Förderer 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist. Das auf dem Förderer 30 geführte Gut wird als Gutgemenge bezeichnet und enthält z. B. Stroh, Kurzstroh, Spreu und Körner. Lediglich die Körner sollen noch abgeschieden werden und sind daher im folgenden als Restgut bezeichnet.

Oberhalb des Förderers 30 befindet sich ein erfindungsgemäßer Rotationsförderer 42. Der Förderer 30 und der Rotationsförderer 42 bilden zusammen die wesentlichen Teile einer ebenfalls erfinderischen Abscheidevorrichtung 44.

Der Rotationsförderer 42 ist im wesentlichen wie ein sogenannter Querschüttler ausgebildet und setzt sich aus einem Drehkörper 46 und in diesem Ausführungsbeispiel mehreren in Reihen angeordneten und auf dem Umfang verteilten Zinken 48 zusammen.

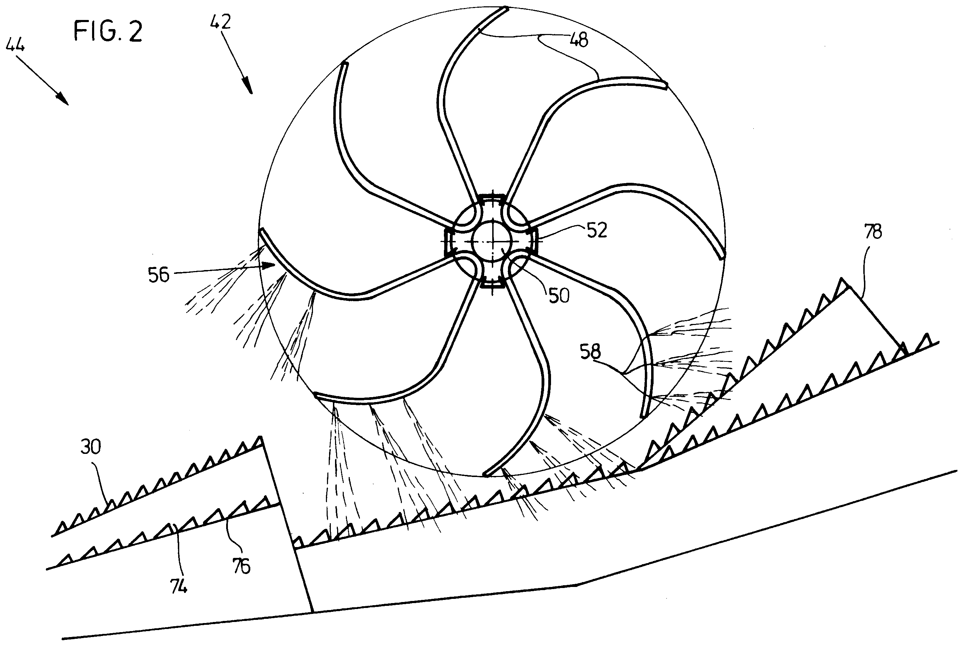

Der Drehkörper 46 besteht aus einer Welle 50 und einem Träger 52, die beide endseitig in Seitenwänden 54 der Erntemaschine 10 drehbar und angetrieben gelagert sind. Der Antrieb erfolgt auf nicht gezeigte Weise mittels zweier Riementriebe. Der Drehkörper 46 dreht sich mit Blick auf die Figuren 1 und 2 entgegen dem Uhrzeigerdrehsinn.

Die Zinken 48 sind mittels nicht näher gezeigter Taumelscheiben drehbar auf der Welle 50 gelagert und stützen sich kurz oberhalb ihres Fußbereichs an dem Träger 52 ab, an dem sie aufgrund der taumelnden Bewegung während des Betriebs entlangreiben. Die Zinken 48 sind in ihren Endabschnitten 56 nachlaufend gekrümmt, so daß sie endseitig nahezu tangential und somit teilweise parallel oder nahezu parallel zu der Oberfläche des Förderers 30 verlaufen. Während des Betriebs tauchen die Zinken 48 auf das zwischen der Oberfläche des Förderers 30 und der Unterseite des Rotationsförderers 42 geführte Gutgemenge ein; die sich oberhalb der Welle 50 befindlichen Zinken 48 bewegen sich normalerweise nicht in Kontakt mit dem Gutgemenge.

Während der Taumelbewegung der Zinken 48 bewegen sich diese quer zur Bildebene und ziehen dabei das auf dem Förderer 30 liegende Gutgemenge auseinander und zusammen, so daß darin enthaltenes Restgut besser abgeschieden werden kann.

Die bisherige Beschreibung trifft auch auf den im Stand der Technik bekannten Rotationsförderer zu; hingegen unterscheidet sich die Ausbildung der Zinken 48 wie folgt:
Im Gegensatz zu bekannten aus Voll-Material bestehenden Zinken 48 sind die Zinken 48 des erfindungsgemäßen Rotationsförderers 42 innen hohl d. h. mit einem Kanal und vorzugsweise als Rohr ausgebildet. Im Bereich ihres Endabschnitts 56 öffnet sich der Hohlraum der Zinken 48 zu mindestens einem Druckluftauslaß 58, der sich auf der voreilenden Fläche des Zinken 48 befindet. Vorzugsweise sind jedoch wie bei dem Ausführungsbeispiel mehrere, z. B. drei Druckluftauslässe 58 vorgesehen. Endseitig sind die in den Zinken 48 vorhandenen Hohlräume geschlossen, damit in diese eingespeiste Luft unter einen ausreichend hohen Druck gesetzt werden kann. Die Krümmung der Zinken 48 und die Anordnung der Druckluftauslässe 58 bewirken, daß nach dem Eintauchen der Endabschnitte 56 der Zinken 48 in das Gutgemenge Druckluft zu dem an seiner Oberfläche perforierten Förderer 30 hin ausströmen kann, die evtl. in dem Gutgemenge enthaltenes Restgut mitreißt.

Anderenends sind die Zinken 48 vorzugsweise über bewegliche Schläuche an eine Druckluftverteileinrichtung 60 angeschlossen, die unter Druck stehende Luft einleitet. Die Druckluftverteileinrichtung 60 besteht im wesentlichen aus einem Rotor 62 und einem Stator 64, die sich konzentrisch übergreifen, deren Berührungsflächen dichtend aneinanderliegen und die gegeneinander drehbeweglich sind. Rotor 62 und Stator 64 befinden sich nahe einer Lagerung des Drehkörpers 46 in einer Seitenwand 54. Der Rotor 62 ist als ein Ring ausgebildet und enthält vier um jeweils 90 Grad zueinander versetzte Auslässe 66' bis 66'''', die über angedeutete Leitungen 68 mit den Hohlräumen in den Zinken 48 in Verbindung stehen. Der Rotor 62 ist drehfest mit dem Träger 52 verbunden und erfährt mit diesem im Betrieb eine ständige Stellungsänderung gegenüber dem Stator 64.

Der Stator 64 ist auf der Welle 50 drehbar gelagert und an der betreffenden Seitenwand 54 drehfest verankert. Im Mittenbereich seiner Umfangsfläche ist eine sich über einen Winkelbereich von weniger als 180 Grad, z. B. 160 - 170 Grad, erstreckende Kammer 70 eingearbeitet, die über eine Leitung 72 mit einer nur schematisch gezeigten Druckluftquelle 73, also insbesondere mit einem Kompressor, in Verbindung steht.

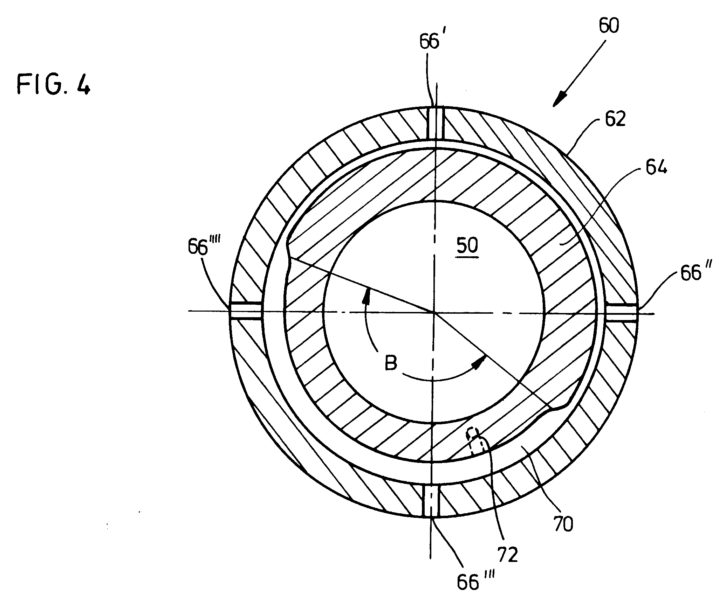

Insbesondere mit Blick auf Figur 4 ist zu erkennen, daß bei der dargestellten Beziehung des Rotors 62 zu dem Stator 64 die Auslässe 66''' und 66'''' momentan im Bereich der Kammer 70 liegen und somit Druckluft aus der Leitung 72 aufnehmen können, während die Auslässe 66' und 66'' außerhalb der Kammer 70 liegen und somit von der Umfangsfläche des Rotors 62 verschlossen sind. Demgemäß wird bei entsprechender Führung der Leitungen 68 zu den Zinken 48 derart, daß die Stellung der Auslässe 66' bis 66'''' auch der der Zinken 48 entspricht, lediglich den sich gerade unten und somit in dem Gutgemenge befindlichen Zinken 48 Druckluft zugeführt, die an den sich konsequenterweise in dem Gutgemenge befindlichen Druckluftauslässen 58 ausströmt.

Der Förderer 30, der im wesentlichen ebenfalls von bekannter Bauart ist, weist auf seiner Oberseite Beläge 74 mit Abscheideöffnungen 76 auf, durch die in dem Gutgemenge enthaltenes Restgut abgeschieden werden kann, indem es von dem aus den Druckluftauslässen 58 ausströmenden Luftstrahl mitgerissen wird.

Die Besonderheit des Förderers 30 besteht darin, daß die Abscheideöffnungen 76 im Bereich des Rotationsförderers 42 größer sind als stromauf- und stromabwärts und daß stromabwärts von ihm eine sogenannte Steilstufe 78 vorgesehen ist, die das Gutgemenge abbremst.

Nach alledem ergibt sich folgende Funktion der Erfindung.

Während des Betriebs wird sowohl die Welle 50 als auch der Träger 52 angetrieben, um somit in bekannter Weise die Zinken 48 in eine rotierende und taumelnde Bewegung zu versetzen. Währenddessen fördert die Druckluftquelle 73 Druckluft durch die Leitung 72 in die Kammer 70 des Stators 64. Aus der Kammer 70 gelangt die Druckluft durch die sich jeweils in dem Bereich der Kammer 70 befindlichen Auslässe 66', 66'', 66''' oder 66'''' zu der entsprechenden Leitung 68 und von dort in den Hohlraum der betreffenden Zinken 48, aus dem sie an den Druckluftauslässen 58 mit hoher Geschwindigkeit wieder austritt. Die infolgedessen durch das Gutgemenge zu den Abscheideöffnungen 76 gerichteten Luftströme reißen das Restgut mit sich und scheiden es somit ab.

Es wird darauf hingewiesen, daß auch bereits ein Zinke 48 und ein Druckluftauslaß 58 ausreicht. Es ist auch nicht unbedingt erforderlich, daß der Zinke 48 eine taumelnde Bewegung durchführt.

## Patentansprüche

1. Rotationsförderer (42) mit wenigstens einem Zinken (48) zum Abscheiden von Restgut aus einem Gutgemenge, insbesondere zum Absondern von Körnern aus einer Strohmatte in einer Erntemaschine (10), dadurch gekennzeichnet, daß an einem in das Gutgemenge eindringenden Endabschnitt (56) des Zinken (48) wenigstens ein von einer Druckluftquelle (73) gespeister Druckluftauslaß (58) vorgesehen ist.

2. Rotationsförderer nach Anspruch 1, dadurch gekennzeichnet, daß der Druckluftauslaß (58) an der voreilenden Fläche des Zinken (48) angebracht ist.

3. Rotationsförderer nach Anspruch 2 oder 3 dadurch gekennzeichnet, daß eine Druckluftverteileinrichtung (60) vorgesehen ist, die dem Druckluftauslaß (58) nur auf einem Teilabschnitt der Bewegungsbahn des Zinken (48) Druckluft zuführt.

4. Rotationsförderer nach einem der Ansprüche 1 bis 3, dadurch gekennzeichnet, daß der Druckluftauslaß (58) von einem als Rohr ausgebildeten oder einen Kanal enthaltenden und einenends verschlossenen Zinken (48) gebildet ist.

5. Rotationsförderer nach einem der Ansprüche 1 bis 3, dadurch gekennzeichnet, daß der Druckluftauslaß (58) von einer bis zu dem Endabschnitt (56) des Zinken (48) geführten Leitung mit einem Druckluftauslaß (58) gebildet ist.

6. Rotationsförderer nach Anspruch 4 oder 5, dadurch gekennzeichnet, daß der Zinke (48) auf einem Drehkörper (50) starr oder beweglich befestigt ist und die Druckluft im Befestigungsbereich des Zinken (48) in den Zinken (48) oder die Leitung eingeleitet wird.

7. Rotationsförderer nach einem oder mehreren der vorherigen Ansprüche, dadurch gekennzeichnet, daß der Zinke (48) in dem Bereich seines Endabschnitts (56) gekrümmt ist.

8. Rotationsförderer nach einem oder mehreren der vorherigen Ansprüche, dadurch gekennzeichnet, daß die Druckluftzufuhr unterbrochen wird, sobald die aus dem Druckluftauslaß (58) austretende Druckluft eine Richtung einnimmt, die einen Austritt des Restguts in die gewünschte Richtung nicht mehr gewährleistet.

9. Rotationsförderer nach einem oder mehreren der vorherigen Ansprüche, dadurch gekennzeichnet, daß die Druckluftverteileinrichtung (60) aus einem Stator (64) und einem Rotor (62) gebildet ist, wobei der Stator (64) eine Leitung (72) und eine mit dieser verbundene Kammer (70) aufweist, während an dem Rotor (62) mindestens ein mit dem Druckluftauslaß (58) in Verbindung stehender Auslaß (66') bis (66'''') vorgesehen ist, der zeitweise mit der Kammer (70) in Verbindung bringbar ist.

10. Abscheidevorrichtung (44) mit einem Rotationsförderer (42) insbesondere nach einem oder mehreren der vorherigen Ansprüche und mit einem insbesondere oszillierenden Förderer (30), auf dem das Gutgemenge aufliegt und der Abscheideöffnungen (76) aufweist, dadurch gekennzeichnet, daß die Abscheideöffnungen (76) des Förderers (30) im Bereich des Rotationsförderers (42) größer sind als außerhalb von diesem.

11. Abscheidevorrichtung (44) nach Anspruch 10, dadurch gekennzeichnet, daß der Förderer (30) im Bereich des Rotationsförderers (42) eine Steilstufe (78) aufweist.
